# EUROPÄISCHE PATENTANMELDUNG

(11) **EP 0 762 062 A2**
(43) Veröffentlichungstag der Anmeldung: **12.03.1997**
(21) Anmeldenummer: 96111494.9
(22) Anmeldetag: 17.07.1996
(51) Int. Cl.: F24F 3/16

(54) **Verfahren und Vorrichtung zur Abtrennung von Kohlendioxid**

(30) Priorität: 09.09.1995 DE 19533407
(71) Anmelder: DORNIER GmbH, D-88039 Friedrichshafen (DE)
(72) Erfinder: Steinwandel, Jürgen, Dr.rer.nat., 88690 Oberuhldingen (DE); Jehle, Walter, Dipl.-Ing., 88263 Horgenzell (DE); Wagner, Burkhard, Dipl.-Ing., 88094 Oberteuringen (DE); Staneff, Theodor, Dipl.-Ing., 88697 Bermatingen (DE)

(57) **Zusammenfassung**

Die Erfindung betrifft eine Verfahren sowie eine Vorrichtung zur kontinuierlichen Abtrennung von Kohlendioxid aus Atemluft in Lebenserhaltungs- oder Kabinenkreislaufsystemen. Dabei werden in einer fließenden, CO₂-selektiven Flüssigmembran (FM) zwei Sätze von Hohlfasern (FS1,FS2) angeordnet, wobei der erste Satz von Hohlfasern (FS1) von der CO₂-haltigen Atemluft durchströmt wird und der zweite Satz von Hohlfasern (FS2) zur Ableitung des Permeatstroms dient.

## Beschreibung

Die Erfindung betrifft ein Verfahren und eine Vorrichtung zur Abtrennung von CO₂ zur Anwendung in Lebenserhaltungs- und Kabinenkreislaufsystemen.

Die kontinuierliche Abtrennung von metabolisch produziertem Kohlendioxid in Lebenserhaltungs- und Kabinenkreislaufsystemen ist erforderlich, um die für Menschen erforderliche Qualität (bezüglich des CO₂-Gehaltes) der Atemluft bereitzustellen. Aufgrund physiologischer Randbedingungen darf dabei ein Gehalt von maximal 0,5 % CO₂ in der Atemluft nicht überschritten werden. Zwar ist bei solchen CO₂-Konzentrationen der verbleibende Restsauerstoffgehalt in der Luft noch bei weitem für die Atemfunktion ausreichend, jedoch führen höhere CO₂-Konzentrationen bei längerer Einwirkung zu physiologischen Störungen unter teilweise beträchtlicher Verminderung des Reaktionsvermögens. Der biochemische Wirkungsmechanismus ist derzeit weitgehend unverstanden und über ein ausschließliches Sauerstoffdefizit nicht zu erklären.

Typische Anwendungsbereiche, wo eine CO₂-Abtrennung aus der Atemluft zwingend erforderlich ist, sind primär Systeme mit komplett geschlossenem Luftkreislauf. Dies ist gegeben bei Systemen der bemannten Raumfahrt und bei U-Booten militärischer und ziviler Nutzung.
Darüber hinaus sind derzeit Bestrebungen im Bereich der zivilen Luftfahrt sowie bei Hochgeschwindigkeits-Bahnsystemen (konventionell und Linearmotorsysteme) erkennbar, die Kabinenluftkreisläufe bis hin zu Schließungsgraden von ca. 85 % auszulegen, um Energie zur Luftbereitstellung, Heizung und Kühlung einzusparen.

Schließungsgrade dieser Größe erfordern in jedem Fall eine kontinuierliche Abtrennung des metabolisch produzierten CO₂.

Bei derzeit betriebenen Systemen mit komplett geschlossenen Kreislaufsystemen (z.B. Unterseeboote, Raumstation MIR) erfolgt die CO₂-Abtrennung durch Feststoffabsorber. Ein Beispiel dafür ist die Verwendung von LiOH-Kartuschen, wobei die Abtrennung des CO₂ unter irreversibler Bindung von Li₂CO₃ aus dem Hydroxid erfolgt. Nach Erreichen der Beladungsgrenze muß der Absorber gewechselt werden. LiOH-Systeme sind derzeit nicht regenerierbar.

Regenerative Systeme auf der Basis selektiver CO₂-Adsorbermaterialien sind im Bereich der chemischen Prozeßtechnik bekannt und Stand der Technik (z.B. Druckwechseladsorption) mit Zeolith-Adsorbermaterialien sowie Flüssigphasenabsorption unter Verwendung organischer Stickstoffbasen, z.B. Ethanolamin mit thermischer oder Druckwechselregeneration. Der typische Anwendungsbereich liegt bei stationären Großanlagen. Auf mobile Systeme sind die technisch etablierten Prozesse kaum übertragbar. Dazu kommt, daß solche Systeme ihrem Wesen nach diskontinuierliche Prozesse darstellen und zur Erreichung eines quasi-kontinuierlichen Prozesses ein hoher verfahrenstechnischer Aufwand getrieben werden muß.
Kontinuierliche und mit vertretbarem verfahrenstechnischen Aufwand betreibbare Prozesse in der Gastrenntechnik erfordern den Einsatz membrangestützter Verfahren.

Dabei ist zu unterscheiden, ob es sich um eine membrangestützte Absorption/Desorption handelt (z.B. TerMeulen et al., WO 94/01204, 1994), oder um einen echten Membrantrennprozeß der Gaspermeation, wobei letzterer Gegenstand der vorliegenden Erfindung ist.

Die klassischen Membranen der Gaspermeation sind Lösungs-Diffusionsmembranen mit dichter aktiver Trennschicht aus Polymermaterialien. Materialien und Leistungsdaten bezüglich Permeabilität und Selektivität bei der CO₂/Lufttrennung sind bekannt. Eine diesbezügliche Zusammenstellung findet sich z.B. bei Jehle et al in "Concentration and Subsequent Methanation of Carbon Dioxide for Space and Environmental Applications", Carbon Dioxide Chemistry, Env. Issues, The Royal Soc, of Chem., Stockholm 1994, S. 261-269. Daraus ist abzuleiten, daß derzeit bekannte Polymermembranen hinsichtlich des zu erwartenden Volumens und Gewichts der Module nicht für die hier im Vorgrund stehenden mobilen Einsatzzwecke verwendet werden können.

Eine problemorientierte Verbesserung der spezifischen CO₂-Transporteigenschaften für Gaspermeationsprozesse ist möglich durch Verwendung von Flüssigmembransystemen mit sogenannten "Carrier-Effekten". Eine solche Carrier-Flüssigmembran ist dadurch gekennzeichnet, daß einem Lösemittel (bei Membransystemen üblicher, aber nicht notwendigerweise Wasser) eine Substanz zugesetzt wird, die in einer selektiven und reversiblen Weise den bevorzugt zu transportierenden Stoff bindet. Damit ist es möglich, die Transportraten um mehrere Zehnerpotenzen zu erhöhen im Vergleich mit der für ein bestimmtes Lösemittel natürlich gegebenen Transportrate. Letztere ist bestimmt durch die physikalische Löslichkeit einer Substanz in einem Lösemittel sowie dem entsprechenden Diffusionskoeffizienten.

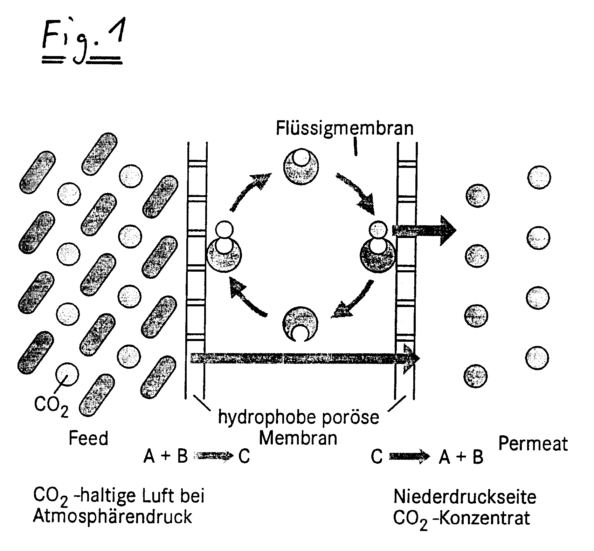

Fig. 1 zeigt schematisch den prinzipiellen Ablauf eines carriergetragenen Transportprozesses in einer Flüssigmembran, wie in der Literatur beschrieben. Das wesentliche Merkmal ist, daß sowohl das Carrier-Molekül, als auch der Carrier/CO₂-Komplex im Lösemittel frei beweglich sind. Letztlich kann jedoch ein gerichteter CO₂-Transport durch die Flüssigmembran nur dann zustande kommen, wenn der Komplex Carrier/CO₂ an der permeatseitigen Phasengrenze in die Ausgangskomponenten dissozieren kann. Dieser Prozeß ist thermodynamisch kontrolliert. Das hier relevante Gleichgewicht lautet: 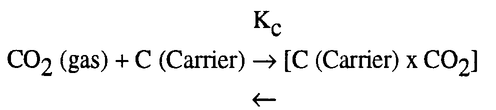 K_{C} bezeichnet die Reaktionskonstante für den besagten Prozeß.
Das Gleichgewicht kann ausschließlich über den Partialdruck von CO₂ gesteuert werden. Ein resultierender CO₂-Fluß durch die Membran infolge Carriertransport erfordert in jedem Fall einen geringeren CO₂-Partialdruck im permeatseitigen Gasraum als im feedseitigen Gasraum. Hohe CO₂-Konzentrationen begünstigen dabei die Carrier/CO₂-Komplexbildung, geringe CO₂-konzentrationen begünstigen den Zerfall des Carrier/CO₂-Komplexes.

Für kontinuierliche Gaspermeations-Membranprozesse kommen folgende Maßnahmen in Betracht:
i) Permeatseitiger Vakuumbetrieb.
   Dabei ist die Saugleistung der Vakuumpumpe insofern anzupassen, daß jederzeit ein kleinerer CO₂-Partialdruck permeatseitig im Vergleich zur Feedseite vorliegt.
ii) Permeatseitiger Spülgasbetrieb.
   Dabei ist das Druckniveau des Spülgases grundsätzlich beliebig. Entscheidend ist allein das Verhältnis Volumenstrom:Spülgas zum Volumenstrom:Permeatgas im stationären Betrieb.
   Notwendige und hinreichende Bedingung für einen resultierenden CO₂-Transport durch die Membran ist, daß infolge des Spülgas-Verdünnungseffektes bezüglich CO₂ dessen effektiver Partialdruck unterhalb des CO₂ Feed-Partialdrucks liegt.

Es ist offensichtlich, daß die Maßnahmen i), ii) auch in Kombination eingesetzt werden können (keine a priori Druckniveaueinschränkung bei ii)).

Fig. 1 zeigt weiterhin die prinzipiell erforderliche Anordnung einer Flüssigmembran, hier konkret für den Fall der Verwendung einer Flüssigmembran auf Wasserbasis. Die Membranflüssigkeit befindet sich dabei zwischen mikroporösen hydrophoben Membranen, die im Regelfall aus Polymermaterialien wie PTFE, Polypropylen oder PVDF bestehen.

Der Gasaustausch erfolgt dabei in erster Näherung ungestört, ein Austreten von Flüssigkeit wird durch die hydrophobe Natur der Materialien verhindert. Befindet sich die Membranflüssigkeit in Ruhe, so liegt der Fall einer immobilisierten Flüssigmembran vor. Methoden der CO₂-Abtrennung mittels solcher Membranen sind in der Literatur beschrieben, z.B. in der **US 4,750,918**. Sie bildet den Oberbegriff des Anspruch 1.
Als selektive Carrier werden wässrige Lösungen bestehend aus K₂ CO₃/KH CO₃ mit organischen Stickstoffbasen wie Monoethanolamin /MEA), Diethanolamin (DEA) beschrieben. Die selektive und reversible Art der CO₂-Bindung durch die organischen Stickstoffbasen ist aus etablierten Gaswäscheverfahren bekannt (z.B. aktiviertes MDEA-Verfahren der BASF AG Ludwigshafen).

Eine andere Ausgestaltungsmöglichkeit zum Aufbau immobiliserter Flüssigmembranen besteht darin, poröse Trägerstrukturen (Membranen) mit einer aktiven Trennflüssigkeit zu tränken (z.B. **EP 0 309 259 B1**).

Die Varianten der immobilisierten Flüssigmembranen sind hinsichtlich ihrer technischen Einsatzfähigkeit bei der CO₂-Abtrennung mit wassergestützten Flüssigmembranen deutlich eingeschränkt.

Ein mit solchen Systemen kaum zu lösendes Problem besteht darin, daß durch die permeatseitig erforderlichen Maßnahmen (Vakuum, Spülgas oder Kombination aus beiden) ein ständiger Lösemittel(Wasser)-Verlust zu verzeichnen ist.

Zwar wird durch Verlust von Wasser aus der Flüssigmembran der Carrier-Transportmechanismus bei moderaten Wasserverlusten noch nicht gestört. Der Wasserverlust ist viel gravierender im Hinblick auf das Vermögen der hydrophoben Membranen, die Trennflüssigkeit zurückzuhalten. Ohne kontinuierliche Wasserzufuhr ist somit bei diesen Membransystemen keine Langzeitstabilität des Prozesses gegeben.

Weiterer Nachteil der Systeme mit immobilisierten Flüssigmembranen ist die Tatsache, daß die für die Anwendung in Lebenserhaltungs- oder Kabinenkreislaufsystemen benötigte Trennleistung zu einer relativ hohen Austauschfläche und somit einer großen Baugröße der Trennstufe führt.

Neben den immobilisierten Flüssigmembransystemen sind auch fließende Flüssigmembransysteme auf der Basis von Plattenmodulen zur CO₂-Abtrennung in der Literatur beschrieben (z.B. Teramoto et al., Kakakukogaku Rombunshu 16, 6 (1990), Eido T. et al. Jap. Offenlegung HEI2-246989 (1990), Jehle. W. et al., SAE Technical Paper 941339 (1994)). Bei Teramoto et al. (1990) und Jehle et al (1994) wurden dabei Labor-Versuchsanlagen zur Bestimmung der relevanten Transportwiderstände eingesetzt. Als selektive Membranen kommen wässrige Lösungen von K₂ CO₃/KH CO₃ mit organischen Stickstoffbasen (MEA,DEA) zum Einsatz.

Bei den bekannten Plattenmodulen bestehen wesentliche Probleme hinsichtlich der Abdichtung der einzelnen Platten. Bei Einheiten mit einer größeren Anzahl von Platten, wie sie für einen wirtschaftlich sinnvollen Einsatz benötigt werden, sind diese Probleme bisher kaum unter Kontrolle zu bekommen.

Aufgabe der vorliegenden Erfindung ist es, ein Verfahren zur CO₂-Abtrennung aus Luft in geschlossenen Lebenserhaltungssysteme und Kabinenkreislaufsysteme mit hoher Wirtschaftlichkeit und guter Trennleistung zu schaffen.

Diese Aufgabe wird mit dem Gegenstand des Anspruchs 1 gelöst. Vorteilhafte Ausbildungen der Erfindung sowie eine Vorrichtung zur Durchführung des Verfahrens sind Gegenstände weiterer Ansprüche.

Gemäß der Erfindung werden in einer in einem Kreislauf fließenden, CO₂-selektiven Flüssigmembran zwei Sätze von Hohlfasern angeordnet. Dabei wird der erste Satz von der CO₂-haltigen Atemluft durchströmt. Der zweite Satz von Hohlfasern dient zur Ableitung des CO₂-reichen Permeatstroms.

Durch die Anwendung fließender Flüssigmembranen wird eine verbesserte Trennleistungen erreicht. Durch Variation der Flüssigkeits-Strömungsbedingungen ist außerdem eine zusätzliche Einflußnahme auf die CO₂-Transporteigenschaften möglich.
Dichtigkeitsprobleme, wie sie von den Plattenmodulen bekannt sind, bestehen nicht.

Um den Stofftransport zu erleichtern, kann jeweils eine Hohlfaser aus dem ersten Satz neben einer Hohlfaser aus dem zweiten Satz geführt werden.

In einer bevorzugten Ausführungsform wird eine Flüssigmembran auf der Basis wässriger, organischer Stickstoffbasen verwendet. Sie kann außerdem Zusätze von Kaliumcarbonat und/oder Kaliumhydrogencarbonat enthalten. In einer optimierten Ausführung ist die Flüssigmembran eine wässrige Lösung von Diethanolamin (DEA) im Konzentrationsbereich 0,1-2 mol/liter.

Das Konzentrationsverhältnis der einzelnen Komponenten der Flüssigmembran wird vorteilhaft konstant gehalten. Um dies zu erreichen, werden mittels einen Meß- und Regelmechanismus die einzelnen Verluste ermittelt und entsprechende Mengen permanent nachgeführt.

Permeatseitig können Vakuumbetrieb oder Spülgasbetrieb oder eine Kombination beider Maßnahmen vorgesehen sein.

In einer vorteilhaften Ausführungsform bestehen beide Sätze von Hohlfasern aus identischem, mikroporösem Polymermaterial hydrophober Natur, z.B. aus Polytetrafluorethylen, Polyethylen oder Polyprophylen.

Mit der Erfindung wird ein technisch einsetzbares Verfahren mit hoher Langzeitstabilität und hoher Selektivität geschaffen.

Die Erfindung wird im folgenden anhand von Fig. näher erläutert. Es zeigen
- Fig. 1.: das Schema einer CO₂-Carrier-Transports (Stand der Technik), wie in der Beschreibungseinleitung erläutert;
- Fig. 2: ein Membran-Hohlfasermodul zur Durchführung des erfindungsgemäßen Verfahrens in zwei Ansichten
- Fig. 3: ein Verfahrensaufbau zur Durchführung des erfindungsgemäßen Verfahrens (mit permeatseitiger Vakuumbetrieb);
- Fig. 4: eine Ausführung des erfindungsgmäßen Verfahrens mit permeatseitigem Spülgasbetrieb;
- Fig. 5: eine Ausführung des erfindungsgmäßen Verfahrens mit permeatseitigen kombinierten Spülgas/Vakuumbetrieb;
- Fig. 6: ein Diagramm gemessener CO₂-Permeabilitäten bei Vakuumbetrieb als Funktion der Differenz CO₂-Feeddruck und CO₂-Permeatdruck.

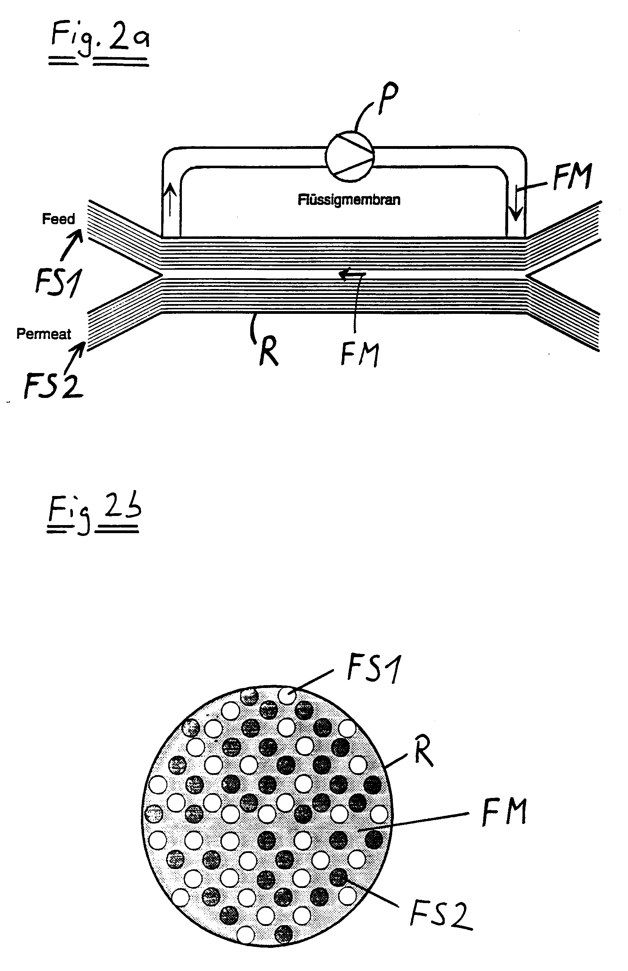

Fig. 2 zeigt ein Membran-Hohlfasermodul zur Durchführung des erfindungsgemäßen Verfahrens im Längsschnitt (Fig. 2a) und im Querschnitt (Fig. 2b). Die Flüssigmembran FM befindet sich in einem als Fließsystem ausgebildeten Modulrohr R. Innerhalb des Modulrohrs R und von der Flüssigmembran FM umgeben, befinden sich die beiden Sätze von Hohlfasern FS1,FS2. Die Konfiguration entspricht der eines Rohrbündel-Wärmetauschers. (In der sehr schematischen Darstellung der Fig. 2a entspricht jede Linie innerhalb des Modulrohrs R einer Faser, wobei in der oberen Hälfte des Modulrohrs R die Hohlfasern FS1 des ersten Satzes und in der unteren Hälfte die Fasern FS2 des zweiten Satzes angeordnet sind; eine realistischere Darstellung mit einer vorteilhaften Anordnung der Fasern zeigt Fig. 2b, die weiter unten beschrieben ist).
Der erste Satz von Hohlfasern FS1 wird von der CO₂-beladenen Atemluft durchströmt. Diese Hohlfasern werden im folgenden auch feedseitige Hohlfasern genannt. Der zweite Satz von Hohlfasern FS2 dient zur Ableitung des CO₂-reichen Permeats. Diese Hohlfasern werden im folgenden auch permeatseitige Hohlfasern genannt. Die Flüssigmembran FM wird in einem Kreislauf mit Hilfe einer Pumpe P umgetrieben. Die Flüssigmembran strömt innerhalb des Modulrohrs R im wesentlichen parallel zu den Hohlfaser-Achsen. Die Anordnung der Hohlfasern innerhalb des Modulrohrs R ist aus Fig. 2b ersichtlich und vorteilhaft so zu wählen, daß jeweils eine Feed-Hohlfaser FS1 und eine Permeat-Hohlfaser FS2 unmittelbar benachbart zu liegen kommen.

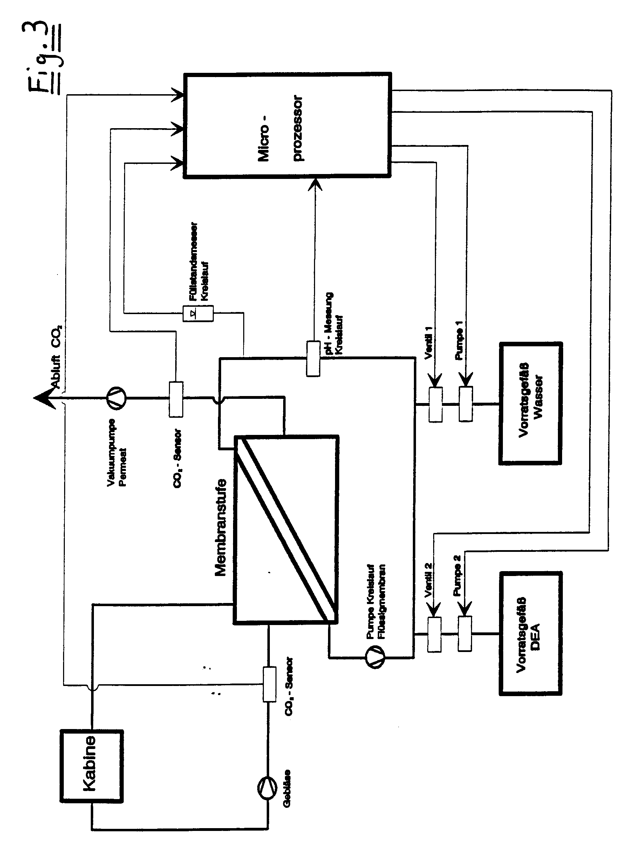

Eine Anordnung zur Gesamtverfahrensführung der erfindungsgemäßen CO₂-Abtrennung aus Atemluft bei Lebenserhaltungs- und Kabinenkreislaufsystemen geht aus der Fig. 3 hervor.

Wie aus der Fig. 3 zu erkennen ist, wird die CO₂-beladene Luft aus der Kabine zur Membranstufe geleitet. Die Membranstufe ist hier nur schematisch als Black Box dargestellt; sie entspricht im wesentlichen dem in Fig. 2 dargestellten Hohlfasermodul. Die CO₂-beladene Kabinenluft befindet sich in dem ersten Satz von Hohlfasern. Das CO₂ dringt durch die CO₂-selektive Flüssigmembran hindurch in den zweiten Satz der Hohlfasern. Die gereinigte Atemluft im ersten Satz der Hohlfasern wird nach Verlassen der Membranstufe in die Kabine zurückgeführt.

Die Zirkulation der Kabinenluft durch die feedseitigen Hohlfasern in der Membranstufe erfolgt durch Verwendung einer Gebläsestufe. Daraus ergibt sich die Anforderung an den maximal zulässigen Druckverlust auf der Membranmodul-Feedseite, der im Bereich 5-10 mbar liegen sollte. Der Druckverlust in der Hohlfaser wird bestimmt durch den Querschnitt und die Länge der Hohlfasern, sowie zusätzlich über die Natur der Gasströmung (laminar oder turbulent). Aufgrund der Untersuchungsergebnisse ist ein Betrieb bei laminarer Strömung vorzuziehen, da gemessen wurde, daß der gesamte Transportwiderstand im Bereich der Membranflüssigkeit anzusiedeln ist. Insofern ist eine Verringerung des gasseitigen Transportwiderstandes durch turbulente Strömung nicht hilfreich und resultiert nur in einem höheren Druckverlust.

Im Hinblick auf Betriebssicherheit ist die praktische Ausgestaltung des Membran-Flüssigkeitskreislaufs von ganz besonderer Bedeutung. Erste Anforderung ist ein möglichst einfacher chemischer Aufbau der Flüssigmembran. Es wurde in diesem Zusammenhang experimentell gefunden, daß eine Flüssigmembran bestehend aus Wasser und ausschließlich Diethanolamin im Konzentrationsbereich 0,1-2 mol/h DEA anderen Membranzusammensetzungen überlegen ist.

Dies gilt insbesondere dann, wenn sowohl der unvermeidliche Wasserverlust und auch der zwar weitaus geringere, aber im Dauerbetrieb nicht vernachlässigbare Verlust des Carrier DEA in Betrieb permanent ausgeglichen wird.

Dies wird in der Praxis derart bewerkstelligt, daß die Flüssigmembran mittels einer Pumpe permanent im Kreislauf betrieben wird. In dem Membrankreislauf integriert ist ein Füllstandsmesser. An diesem kann der Wasserverlust im Membrankreislauf erkannt werden (Niveauabsenkung). Der Füllstandsmesser ist als Sensoreinheit ausgebildet. Die digitalisierten Anzeigewerte werden einem Mikroprozessor zugeführt. Bei Absinken des Flüssigkeitsniveaus über einen vergebenen Schwellwert steuert der Mikroprozessor das Einspritzventil **1** und die Flüssigkeitspumpe **1** des Wasser-Vorratsgefäßes an und der Membrankreislauf wird mit einer entsprechend berechneten Menge von Wasser versorgt.

In gleicher Weise wird bezüglich des Verlustes des Carrier DEA verfahren. Dazu ist jedoch ein größerer Meß- und Regelaufwand erforderlich:
Ein zuverlässiges Erkennen der momentanen DEA-Konzentration erfordert einmal eine kontinuierliche Messung des pH-Wertes in der Flüssigmembran. Darüber hinaus ist der momentane Betriebszustand der Membran von Bedeutung. Dieser ist bestimmbar durch eine vergleichende Messung der absoluten CO₂-Teilchenzahldichten im Feed und im Permeat. Die Anzeigen der beiden CO₂-Sensoren sowie der pH-Messung werden wiederum digitalisiert dem Mikroprozessor zugeführt, der wie in vorab bei der Wasserversorgung beschriebenen Weise die DEA-Zufuhr aus Vorratsgefäß **2** steuert.

Die Permeatseite der Membranstufe ist mit einer Vakuumpumpe verbunden (permeatseitiger Vakuumbetrieb, wie weiter oben beschreiben).

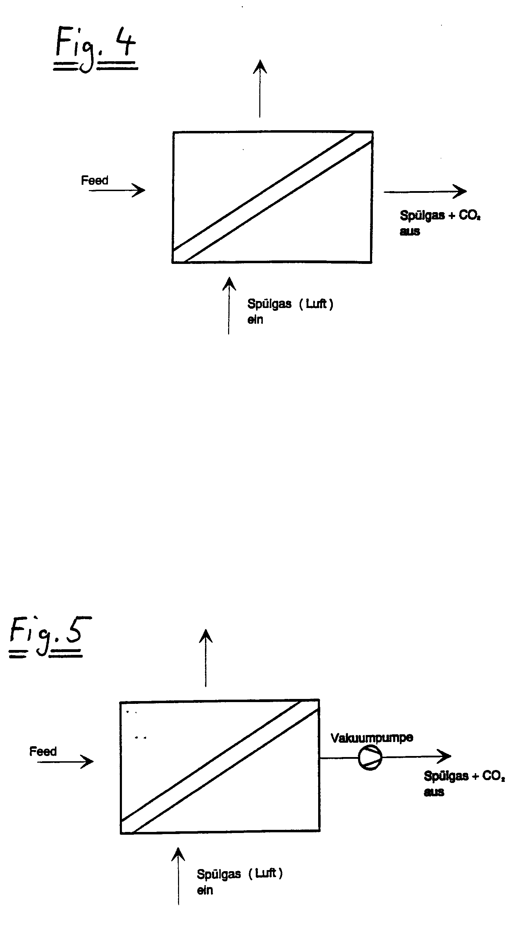

Fig. 4 und 5 zeigen in schematischer Darstellung zwei Varianten zum permeatseitigen Betrieb, wobei der übrige Aufbau gegenüber Fig. 3 unverändert ist. In Fig. 4 ist der permeatseitige Spülgasbetrieb dargestellt. Dabei wird in die permeatseitigen Hohlfasern ein Spülgas, z.B. Luft, eingespeist.
In Fig. 5 ist eine Kombination aus Spülgas- und Vakuumbetrieb dargestellt. Gegenüber Fig. 4 sind nun zusätzlich die permeatseitigen Hohlfasern mit einer Vakuumpumpe verbunden.

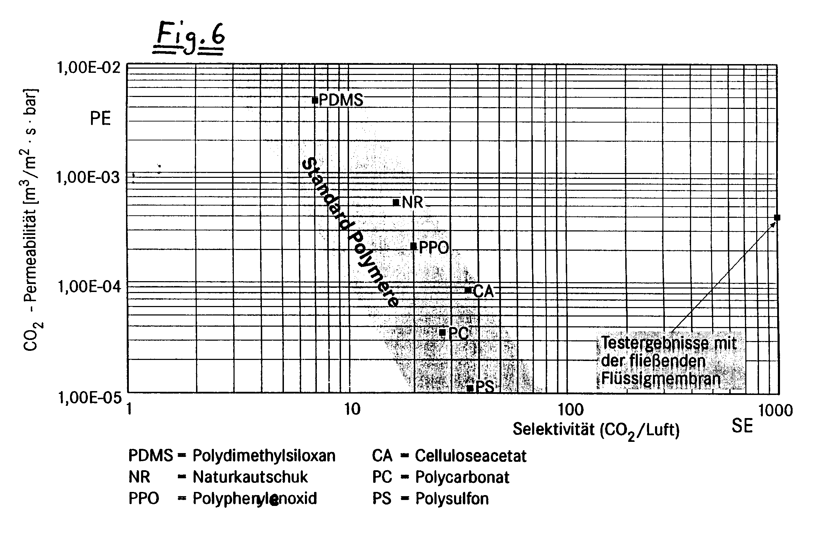

Die Fig. 6 zeigt eine Diagramm gemessener CO₂-Permeabilitäten bei permeatseitigem Vakuumbetrieb als Funktion der Differenz CO₂-Feeddruck und CO₂-Permeatdruck (Selektivität).
In dem geschwärzten Balken sind die Ergebnisse für einige klassischen Polymermaterialien bei der Verwendung als Lösungs-Diffusionsmembranen dargestellt (siehe Beschreibungseinleitung Seite 3). Wie aus dem Diagramm zu entnehmen ist, weisen diese Polymermaterialien unterschiedliche CO₂-Permeabilitäten auf, die Selektivität CO₂/Luft ist dabei für die hier beschriebene Anwendung jedoch nicht ausreichend hoch. Im Vergleich hierzu ist ein Versuchsergebnis bei Einsatz des erfindungsgemäßen Verfahrens eingezeichnet. Damit sind im Vergleich zu den bekannten Verfahren hohe Werte der Selektivität erreichbar, bei gleichzeitig akzeptablen Werten der Permeabilität.

## Patentansprüche

1. Verfahren zur kontinuierlichen Abtrennung von CO₂ aus Atemluft in Lebenserhaltungs- oder Kabinenkreislaufsystemen, wobei man die CO₂-haltige Atemluft durch einen 1. Satz von Hohlfasern (FS1) leitet, der in eine CO₂-selektive Flüssigmembran (FM) eingebettet ist und das CO₂-reiche Permeat durch einen ebenfalls in der Membran angeordneten 2. Satz von Hohlfasern (FS2) ableitet, **dadurch gekennzeichnet**, daß man die Flüssigmembran (FM) in einem Kreislauf führt.

2. Verfahren nach Anspruch 1, **dadurch gekennzeichnet**, daß man eine Flüssigmembran auf der Basis wässriger, organischer Stickstoffbasen einsetzt.

3. Verfahren nach Anspruch 2, **dadurch gekennzeichnet**, daß man der Flüssigmembran Kaliumcarbonat oder Kaliumhydrogencarbonat zusetzt.

4. Verfahren nach einem der vorangehenden Ansprüche, **dadurch gekennzeichnet**, daß man als Flüssigmembran eine wässrige Lösung von Diethanolamin (DEA) im Konzentrationsbereich 0,1-2 mol/l einsetzt.

5. Verfahren nach einem der vorangehenden Ansprüche, **dadurch gekennzeichnet**, daß man das Mischungsverhältnis der Komponenten der Flüssigmembran während des Betriebs konstant hält.

6. Verfahren nach Anspruch 5, **dadurch gekennzeichnet**, daß man mittels eines Meß- und Regelmechanismus mindestens eine der Komponenten der Flüssigmembran permanent nachführt.

7. Verfahren nach einem der vorangehenden Ansprüche, **dadurch gekennzeichnet**, daß man die Hohlfasern des zweiten Satzes im Vakuumbetrieb oder im Spülgasbetrieb oder einer Kombination daraus betreibt.

8. Vorrichtung zur Durchführung des Verfahrens nach einem der Ansprüche 1 bis 7, umfassend:
a) eine Membranstufe, enthaltend eine in einem Kreislauf fließende, CO₂-selektive Flüssigmembran (FM), innerhalb derer sich zwei Sätze von Hohlfasern (FS1,FS2) für die CO₂-haltige Atemluft und das Permeat befinden,
b) Mittel zum Messen und Regeln, um die Verluste der Flüssigmembran permanent auszugleichen,
c) eine Spüleinrichtung und/oder eine Vakuumpumpe auf der Permeatseite.

9. Vorrichtung nach Anspruch 8, **dadurch gekennzeichnet**, daß die Mittel zum Messen und Regeln einen Mikroprozessor sowie Meßstellen für den Kreislauffüllstand der Flüssigmembran umfassen.

10. Vorrichtung nach Anspruch 9, **dadurch gekennzeichnet**, daß die Mittel zum Messen und Regeln zusätzlich Meßstellen für den CO₂-Gehalt in der CO₂-reichen Atemluft und in dem Permeat sowie eine Meßstelle für den pH-Wert der Flüssigmembran umfassen.

11. Vorrichtung nach einem der Ansprüche, **dadurch gekennzeichnet**, daß jeweils eine Hohlfaser aus dem ersten Satz neben einer Hohlfaser aus dem zweiten Satz angeordnet ist.

12. Vorrichtung nach einem der Ansprüche 8 bis 11, **dadurch gekennzeichnet**, daß beide Sätze von Hohlfasern aus identischem, mikroporösem Polymermaterial hydrophober Natur bestehen.

13. Vorrichtung nach Anspruch 12, **dadurch gekennzeichnet**, daß die Hohlfasern aus Polytetrafluorethylen, Polyethylen oder Polypropylen bestehen.
